Europäisches Patentamt

European Patent Office

Office européen des brevets

(11) Publication number: **0 102 253**
**A2**

# (12) EUROPEAN PATENT APPLICATION

(21) Application number: **83305090.9**

(22) Date of filing: **02.09.83**

(51) Int. Cl.³: **A 01 M 7/00**

(30) Priority: **02.09.82 BR 8205194**

(43) Date of publication of application:
**07.03.84 Bulletin 84/10**

(84) Designated Contracting States:
**FR GB IT NL**

(71) Applicant: Bentley, Geoffrey
Rua Gameleira 111
Ribeirao Preto Sao Paulo(BR)

(72) Inventor: Bentley, Geoffrey
Rua Gameleira 111
Ribeirao Preto Sao Paulo(BR)

(74) Representative: Cline, Roger Ledlie et al,
Marks & Clerk 57-60 Lincoln's Inn Fields
London WC2A 3LS(GB)

(54) Spraying device.

(57) A spraying device has a pair of side pieces 6 joined together at the top 7 and inwardly directed spraying heads 9 which are caused to oscillate about horizontal axes to vary the direction at which spraying solution is applied to a plant located between the side pieces 6. When the device is movable on wheels 5, the oscillation of the heads 9 can be caused by a drive 10 from the wheels 5. Rear doors 8 close in the chamber formed by the side pieces 6 and are openable to allow plant 15 to exit from the chamber. The device can be drawn by a tractor 3 whose power take off can be used to drive the heads 9.

FIG. 3.

EP 0 102 253 A2

## SPRAYING DEVICE

This invention relates to a spraying device for use with plants, bushes or trees, either individually or planted in rows. Because the leaves grow at random angles and their ends often droop in relation to the stem, it is difficult to apply the spraying solution to the underside of the leaf, where it is specially required.

This invention is of the type of agricultral implement having a side piece for location on one side of the plant, bush or tree to be sprayed and another side piece to be located on the other side, the two side pieces being joined together at the top. When the plants, bushes or trees are arranged in rows, the implement can be moved along the rows with the plants, bushes or trees passing between the side pieces. One or more spraying devices are mounted on the interior of the device to apply spraying solution.

The invention overcomes the problem of efficient distribution of the spraying solution by mounting the spraying device on a horizontal axis and oscillating it about that axis. The azimuth of the spraying device therefore changes and a spraying solution is applied to the plant, bush or tree over a range of angles.

In order further to increase the efficiency of the distribution system, the device may be formed as a saturation chamber, in which the side pieces form closed walls and a closed roof joins together the two side pieces and rearwardly opening rear doors are provided. The implement therefore provides a chamber open only at the front and to the ground which will retain a high concentration of spraying droplets to assist saturation of the plant bush or tree being sprayed. As the device is moved, the plant will force open the rear doors as it moves out of the chamber.

An example of the invention will now be described with reference to the accompanying drawings in which:

Fig. 1 is a side elevation of a spraying device,

Fig. 2 is a plan of the device of Fig. 1,

Fig. 3 is a front elevation of the device of Fig. 1,

Fig. 4 is a schematic view of the device of Fig. 3,

Fig. 5 is a front elevation of a spraying head,

Fig. 6 and 7 illustrate how the width of the device may be adjusted and,

Fig. 8 is a plan of the device of Fig. 1 in relation to two rows of plants.

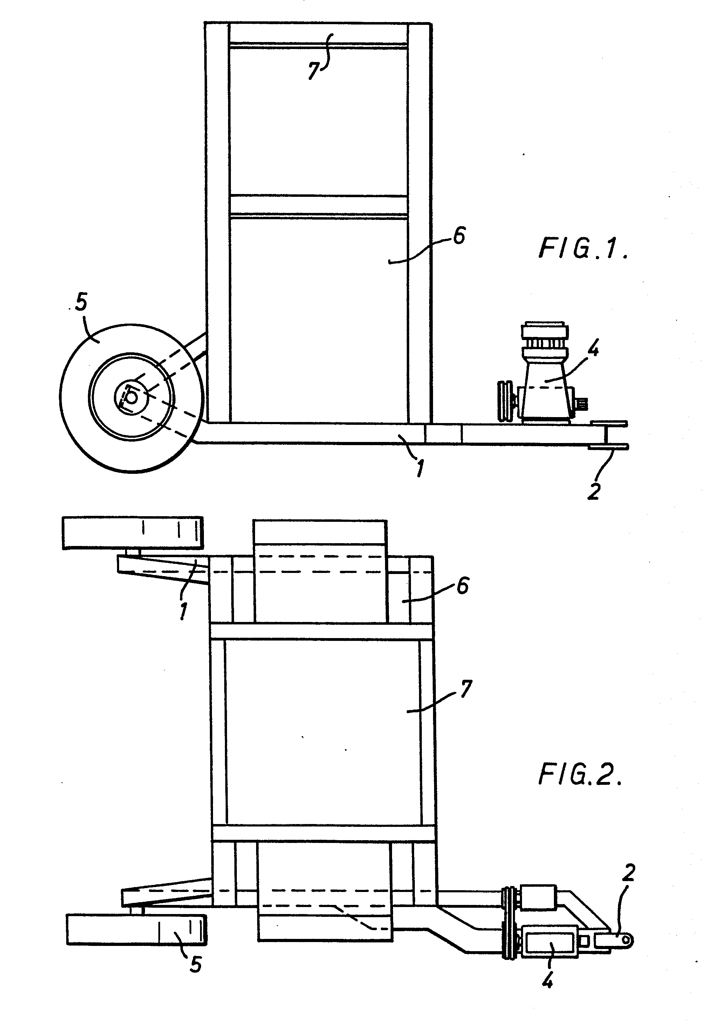

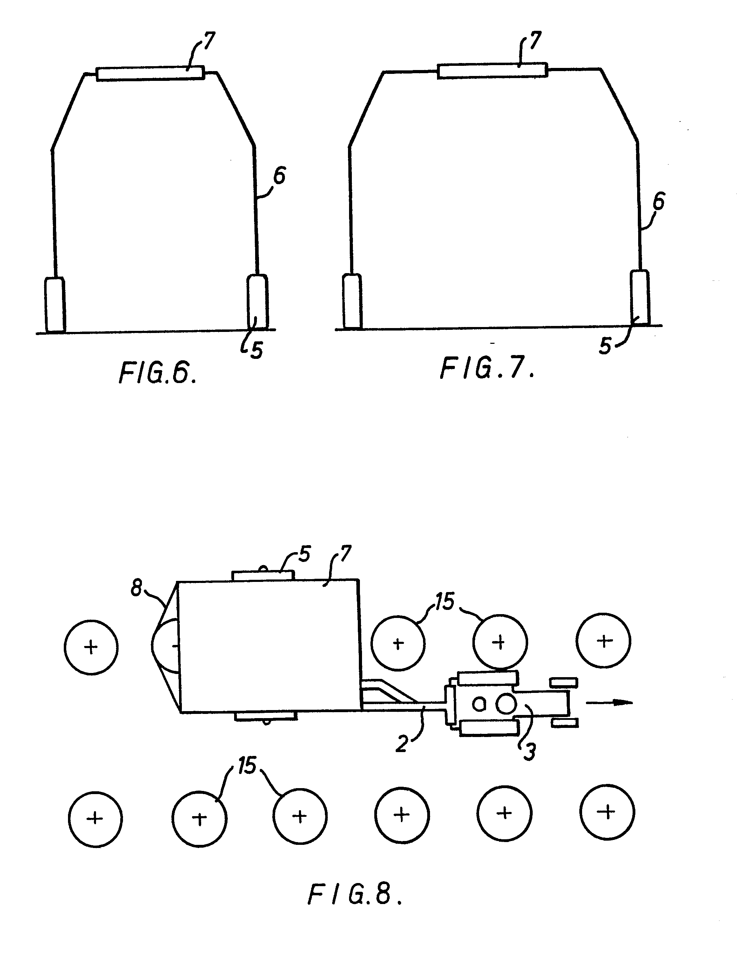

The illustrated spraying device comprises of a pair of side pieces 6 joined together at the top by a roof 7. Two inwardly directed spraying heads 9 are provided on each side piece 6. As can best be seen from Fig. 1, the side pieces 6 are mounted on a framework 1 having rear wheels 5 and a tow-bar leading to a towing hook 2 for attachment to a tractor 3 (see Fig. 8).

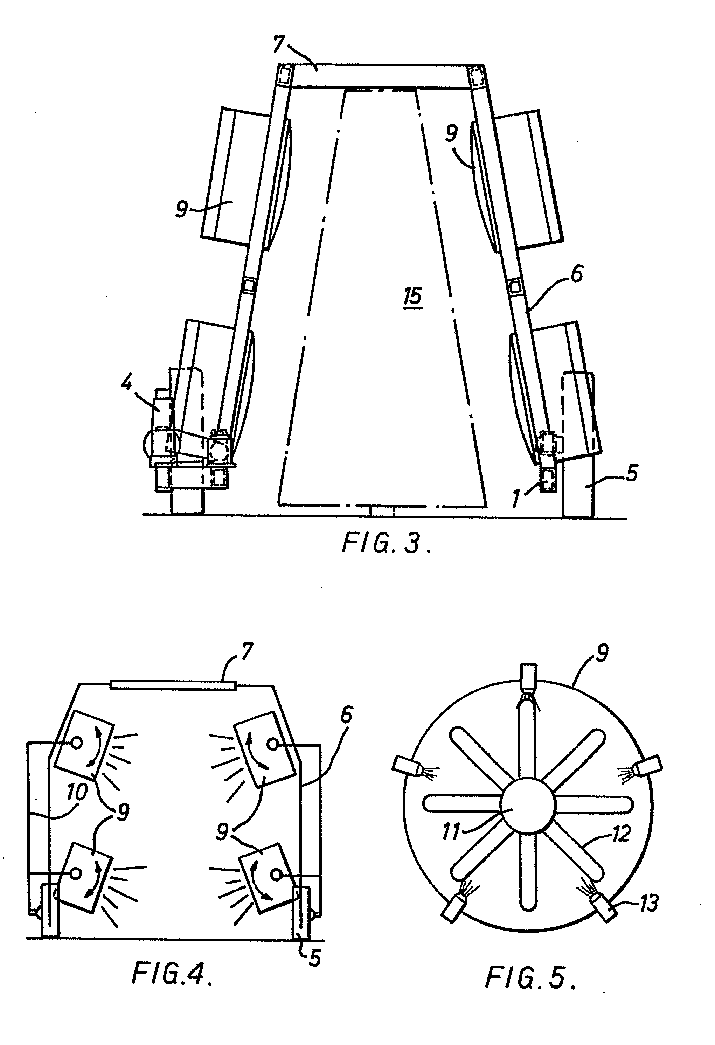

As will be seen from Fig. 3, the spraying heads are directed inwards towards the plant 15 to be sprayed. The heads 9 are mounted on horizontal axes parallel to the length of the side pieces 6 and are caused to oscillate about those axes by a drive 10 from the wheels 5 as is diagrammatically illustrated in Fig. 4. As the wheels 5 revolve, the heads 9 will oscillate about their axes and direct spraying solution at varying angles over the plant 15.

The spraying head 9 is illustrated in more detail in Figure. 5. A plurality of nozzles 13 are directed inwardly about a circle towards a fan 11 driven by a hydraulic pump 4 mounted on the tow-bar. The pump 4 is driven from a power take - off point on the tractor 3. The blades 12 of the fan 11 direct spraying droplets from the nozzles 13 normally to the plane of the circle towards the plant 15.

In order to increase the saturation of spraying droplets within the device, the side walls 6 are closed in around the spraying heads 9, the roof 7 is closed and rear doors 8 are provided which can be opened against a closing spring as the device is moved forward relative to the plant, as can be seen from Fig. 8. The spraying droplets are thereby retained within the chamber to increase the chance of their being applied to the plant to be sprayed.

This can be seen from a comparison of Figs. 6 and 7, the roof 7 is telescopic, allowing the side pieces to be adjusted to different separations to accommodate rows of plants 15 of different widths. Fig. 8 shows two rows of plants 15, with the tractor 3 travelling between the two rows. In order that the plants 15 may pass centrally through the device, the tow-bar and the towing hook 2 are off set to one side of the device. It would of course be possible for the device to be self-propelled and self-powered.

Claims:

1. A spraying device having a pair of side pieces 6 joined together at the top 7 and an inwardly directed spraying head 9, characterized in that the spraying head 9 is mounted for oscillation about horizontal axis.

2. A device as claimed in claim 1 wherein the side pieces 6 are mounted on wheels 5 and the spraying head 9 is drivingly connected to a wheel 5 so as to oscillate about its axis as the wheel 5 is rotated.

3. A device as claimed in claim 1 or claim 2 wherein the side pieces 6 are joined together telescopically at the top 7 so as to be adjustable in separation.

4. A device as claimed as in any one of claims 1 to 3 wherein the side pieces 6 and top 7 are closed in and closeable rear doors 8 are provided, openable to allow a plant to pass out of the chamber formed by the side walls 6.

1/3

FIG.1.

FIG.2.

FIG. 3.

FIG.4.

FIG.5.

0102253

FIG.6.

FIG.7.

FIG.8.